# EUROPEAN PATENT APPLICATION

(11) **EP 2 271 035 A1**
(43) Date of publication of application: **05.01.2011**
(21) Application number: 09749417.3
(22) Date of filing: 08.04.2009
(51) Int. Cl.: H04L 12/58

(54) **METHOD AND DEVICE FOR GROUP-TRANSMITTING IMS INSTANT MESSAGES**

(30) Priority: 20.05.2008 CN 200810067380
(71) Applicant: Huawei Technologies Co., Ltd., Longgang District, Shenzhen Guangdong 518129 (CN)
(72) Inventor: JIN, Xiaoming, Longgang Disitrict Shenzhen 518129 (CN); SHI, Youzhu, Longgang Disitrict Shenzhen 518129 (CN); QI, Baojian, Longgang Disitrict Shenzhen 518129 (CN)
(74) Representative: Kreuz, Georg Maria
(86) International application number: PCT/CN2009/071193
(87) International publication number: WO 2009/140874

(57) **Abstract**

A method for group-transmitting an IP Multimedia Subsystem (IMS) instant message includes: receiving, by an entity for group-transmitting a multicast group message (101), the IMS instant message sent from a message sending entity (102); and sending, by the entity for group-transmitting a multicast group message (101), the IMS instant message to all message receiving entities (103) in the multicast group. An entity for group-transmitting a multicast group message (101) is further provided. Therefore, the load of a server is decreased by group-transmitting an IMS instant message through multicast.

## Description

The application claims the benefit of priority to Chinese Patent Application No. 200810067380.5, filed on May 20, 2008, and entitled "METHOD AND DEVICE FOR GROUP-TRANSMITTING IMS INSTANT MESSAGE", which is incorporated herein by reference in its entirety.

### FIELD OF THE TECHNOLOGY

The present invention relates to the field of communications, and more particularly to a method and a device for group-transmitting an IP Multimedia Subsystem (IMS) instant message.

### BACKGROUND OF THE INVENTION

IMS is an IP Multimedia Subsystem defined by the 3rd Generation Partnership Project (3GPP) standard, and a target network of the 3rd Generation (3G) mobile network for achieving packet voice and packet data, and providing uniform multimedia services and applications.

The IMS uses an IP packet domain as a bearer channel for control signaling and media transmission, and uses a Session Initiation Protocol (SIP) as call control signaling, so as to achieve separation of the service management, session control, and bearer access from each other.

Currently, other International Standard Organizations, such as the International Telecommunication Union-Telecommunication Standardization Sector (ITU-T) and European Telecommunications Standards Institute (ETSI), also use the IMS as a core network of the next generation networks defined.

An IMS instant message service permits a network entity to send a message to another network entity. The contents sent by an IMS instant message may be a text, a multimedia message, and other contents of various formats of Multipurpose Internet Mail Extensions (MIME) types, including instant message communication from terminal to terminal, from terminal to value added application, and from value added application to terminal.

The IP multicast (also known as multiple access broadcast) technology enables one or more hosts (multicast sources) to send a single data packet to multiple hosts. The multicast, as point-to-multipoint communication, is one of the efficient ways to save the network bandwidth. In the application of network audio/video broadcast, when a signal needs to be transferred from a node to multiple nodes by means of repeated point-to-point communication or by means of broadcast, the network bandwidth is seriously wasted; in this case, only the use of the multicast is a preferred choice. The multicast enables one or more multicast sources to send a data packet to only a particular multicast group, and only hosts joined in the multicast group may receive the data packet.

The prior art has at least the following problems

In an existing IMS instant message service, the sending of messages between multiple users is mainly achieved by means of conference group-transmission, that is, only the participants of a conference may send and receive messages, and with the increasing number of the participants of the conference, higher performance of the conference server is required, and more resources are occupied, thereby increasing costs.

### SUMMARY OF THE INVENTION

The present invention is directed to a method and a device for group-transmitting an IMS instant message, so as to save resources occupied in group-transmitting the instant message, and decrease the load of a server.

In order to achieve the preceding objectives, the present invention provides a method for group-transmitting an IMS instant message. The method includes the following steps:

An entity for group-transmitting a multicast group message receives an IMS instant message sent from a message sending entity.

The entity for group-transmitting a multicast group message sends the IMS instant message to all message receiving entities in a multicast group.

The present invention further provides an entity for group-transmitting a multicast group message. The entity includes a message service unit and a multicast media transmitting unit.

The message service unit is configured to receive an IMS instant message sent from a message sending entity.

The multicast media transmitting unit is configured to send the IMS instant message to all message receiving entities in the multicast group.

As compared with the prior art, the embodiments of the present invention achieve group-transmission of a message by means of multicast in the present invention. In the embodiments, users in need of the message may receive all data in a multicast group if they join in the group, in spite of the other users in the multicast group and identities (IDs) of the users so that all the users in the multicast group share data traffic, and therefore the load of the server is decreased.

### BRIEF DESCRIPTION OF THE DRAWINGS

FIG. 1 is a schematic structural view of a system according to Embodiment 1 of the present invention;
FIG. 2 is a schematic flow chart of a method according to Embodiment 2 of the present invention;
FIG. 3 is a schematic flow chart of a method according to Embodiment 3 of the present invention;
FIG. 4 is a schematic flow chart of a method according to Embodiment 4 of the present invention;
FIG. 5 is a schematic flow chart of a method according to Embodiment 5 of the present invention;
FIG. 6 is a schematic flow chart of a method according to Embodiment 6 of the present invention; and
FIG. 7 is a schematic structural view of an entity for group-transmitting a multicast group message of the present invention.

### DETAILED DESCRIPTION OF THE EMBODIMENTS

In the prior art, in the process of implementing an IMS instant message service, a user needs to know the ID or conference identifier of each message receiver when sending a message. The message is forwarded to participants of the conference by a conference server. To forward the message, the conference server needs to know the ID of each participant of the conference. In the prior art, the sending of messages between multiple users is achieved by means of conference group-transmission, that is, only the participants of a conference may send and receive messages, and with the increasing number of the participants of the conference, higher performance of the conference server is required, and more resources are occupied, thereby increasing costs.

In the present invention, group-transmission of a message is achieved by using multicast, in which users in need of the message may receive all data in a multicast group as long as they join in the group, in spite of the other users in the multicast group and IDs of the users, so that all the users in the multicast group share data traffic, thereby the load of the server is decreased. The method for group-transmitting a message by using multicast according to the present invention may be used in the following scenarios: A user joins in a multicast program, intends to deliver some comment messages on the current program, and expects the comment contents to be received by all users watching the program, with no need to know the ID of each user nor care the number of the users intending to receive the comment messages; and a user expects to join in a chat room of a live football game, and chat with all users in the chat room.

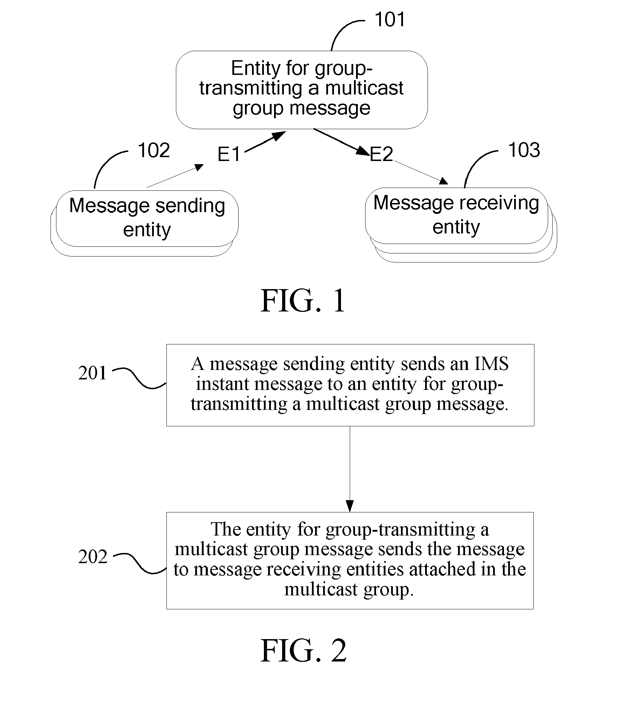

FIG. 1 is a schematic view of a system according to Embodiment 1 of the present invention. Referring to FIG. 1, the system includes an entity for group-transmitting a multicast group message 101, a message sending entity 102, and message receiving entities 103. The functions of each network entity are described as follows:

The entity for group-transmitting a multicast group message 101 is configured to receive an IMS instant message sent from the message sending entity 102, and group-transmit the message to the message receiving entities 103 by means of multicast.

An E1 interface protocol between the entity for group-transmitting a multicast group message 101 and the message sending entity102 may be SIP, Hypertext Transfer Protocol (HTTP), Routing Table Protocol (RTP), Message Session Relay Protocol (MSRP), or other standard or proprietary protocols.

An E2 interface protocol between the entity for group-transmitting a multicast group message 101 and the message receiving entities 103 may be RTP, Internet Group Management Protocol (IGMP), MSRP, or other standard or proprietary protocols.

The message sending entity 102 is configured to send the IMS instant message input by a user or available from a network to the entity for group-transmitting a multicast group message 101. The message sending entity 102 may be disposed on a user terminal (for example, Internet Protocol Television (IPTV) terminal or IMS terminal) or in a network entity (for example, IPTV service server).

The message receiving entities 103 are configured to receive the IMS instant message from the entity for group-transmitting a multicast group message 101. The message receiving entities 103 may be disposed on a user terminal (for example, IPTV terminal or IMS terminal).

FIG. 2 is a schematic flow chart of a method for group-transmitting a message by using multicast according to Embodiment 2 of the present invention. The method of this embodiment includes the following steps:
Step 201: A message sending entity sends an IMS instant message to an entity for group-transmitting a multicast group message.

In step 201, the message sending entity acquires an address of the entity for group-transmitting a multicast group message. Specifically, the message sending entity sends the message to the multicast group message sending entity in one of the following manners.

Manner 1: The message is sent, through a signaling plane, to the entity for group-transmitting a multicast group message.

In this manner, the message sending entity may send the message to the entity for group-transmitting a multicast group message by carrying the message content in the SIP MESSAGE and the HTTP POST. By using this manner, when the quantity of the messages sent from the message sending entity is small, the occupied resources are small and it is easy to implement.

Manner 2: The message is sent, through a media channel, to the entity for group-transmitting a multicast group message.

The implementing process of this manner includes the following steps: The message sending entity acquires the address of the entity for group-transmitting a multicast group message. The message sending entity initiates a session establishment process to the entity for group-transmitting a multicast group message according to the address of the entity for group-transmitting a multicast group message, and completes the negotiation of an MSRP media channel by session establishment, and the message sending entity sends, through the MSRP media channel, the message to the entity for group-transmitting a multicast group message. When the message sending entity needs to send multiple messages continuously, the potential problem of network congestion caused in transfer of large quantities of signaling messages in a network may be avoided by using this manner.

Step 202: The entity for group-transmitting a multicast group message group-transmits the message to the message receiving entities attached in a multicast group in one of the following manners:
Manner 1: The IMS instant message is forwarded, through a multicast transmission channel, to the message receiving entities in the multicast group.

In this manner, the entity for group-transmitting a multicast group message receives the IMS instant message sent from the message sending entity, optionally encapsulates the received IMS instant message in a multicast media stream, and forwards the IMS instant message, together with the multicast media stream, to all the message receiving entities joining in the multicast group by means of multicast; or definitely, forwards the IMS instant message without encapsulation to all the message receiving entities joining in the multicast group by means of multicast, that is, the IMS instant message is individually transmitted instead of being sent together with the media stream. By using this manner, the existing multicast resource channels can be utilized, with no need to re-allocate the resources.

Manner 2: The message is forwarded, through established MSRP media channels, to the message receiving entities in the multicast group.

In this manner, the message receiving entities have established the MSRP media channels between the message receiving entities and the entity for group-transmitting a multicast group message by way of multicast session negotiation when the message receiving entities join in the multicast group, and the entity for group-transmitting a multicast group message sends, through the established MSRP channels, the message to all the message receiving entities in the multicast group.

For example, in an IPTV live broadcast service, the message receiving entities send SIP INVITE messages when initiating a live session establishment process, and the INVITE requests are routed to the entity for group-transmitting a multicast group message. The entity for group-transmitting a multicast group message acquires the associated message service information of a live program, initiates a session request SIP INVITE to a multicast media transmitting unit, and establishes MSRP media channels between the message receiving entities and the entity for group-transmitting a multicast group message by way of session negotiation. It should be noted that the preceding request messages sent from the message receiving entities may also be SIP re-INVITE. For example, if the message receiving entities directly join in the multicast group by using the original session control, the messages sent by the message receiving entities after joining in the multicast group are session modification requests SIP re-INVITE. The session modification initiated by message receiving entities is triggered according to the message service information acquired from the media stream immediately after the message receiving entities join in the multicast group, or is triggered when a user starts a message input man-machine interface. By using this manner, the transfer of control signaling between networks is decreased.

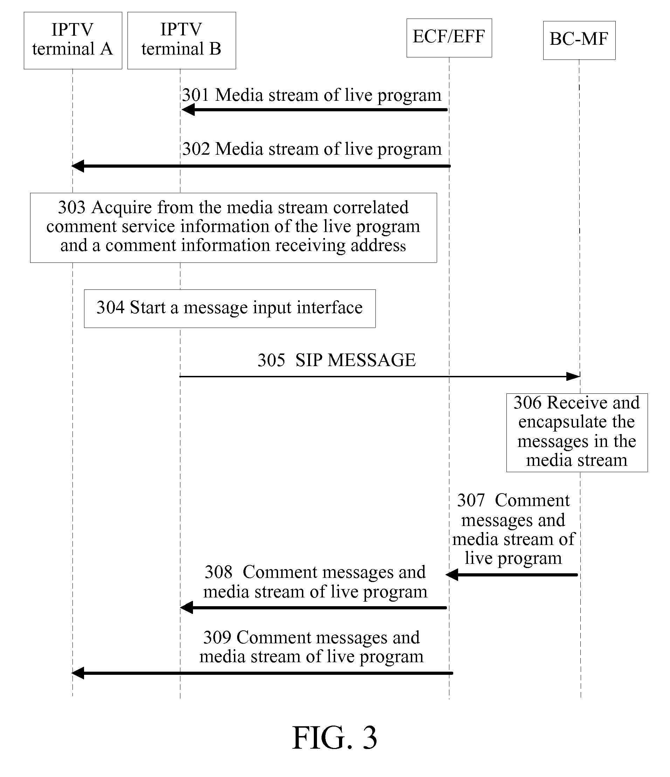

FIG. 3 is a schematic flow chart of a method for group-transmitting an IMS instant message according to Embodiment 3 of the present invention. In this embodiment, an IPTV user joins in a live program 1, starts a man-machine interface involving in a comment by means of a link or a button in an IPTV terminal, and inputs corresponding comment contents to participate in the comment. The IPTV terminal acquires the comment contents from a media stream of the live program, and displays the comment contents below the live program in a manner of scroll bar. In this embodiment, multicast secondary nodes Elementary Control Functions/Elementary Forwarding Functions (ECF/EFF) and multicast content source Broadcast-Media Function (BC-MF) are used as entities for group-transmitting multicast group messages, an IPTV terminal B is used as a message sending entity, and an IPTV terminal A is used as a message receiving entity. The method of this embodiment includes the following steps:
Step 301: The IPTV terminal B joins in a multicast group of the live program, and receives the media stream of the live program from the multicast secondary nodes ECF/EFF.
Step 302: The IPTV terminal A joins in the multicast group of the live program, and receives the media stream of the live program from the multicast secondary nodes ECF/EFF.
Step 303: The IPTV terminal A and the IPTV terminal B acquire from the media stream the comment service description information associated with the live program and a comment information receiving address BC-MF, and save the comment service description information in a terminal which may display the comment service information in the form of a link.
Step 304: The IPTV terminal B starts a comment information input interface by means of a link or a button, and inputs comment contents.
Step 305: The IPTV terminal B sends a SIP MESSAGE carrying the comment contents to the comment information receiving address BC-MF.
Step 306: The BC-MF receives the comment messages, and optionally encapsulates the comment messages in the media stream of the live program.
Step 307: The BC-MF sends the comment messages to the multicast secondary nodes ECF/EFF. The comment messages may either be transmitted, together with the media stream of the live program, to the multicast secondary nodes, or individually transmitted to the multicast secondary nodes.
Steps 308 and 309: All IPTV terminals joining in the multicast group (including the IPTV terminal A and the IPTV terminal B in this embodiment) receive, through established multicast media channels, the comment messages and the media stream of the live program from the multicast secondary nodes.

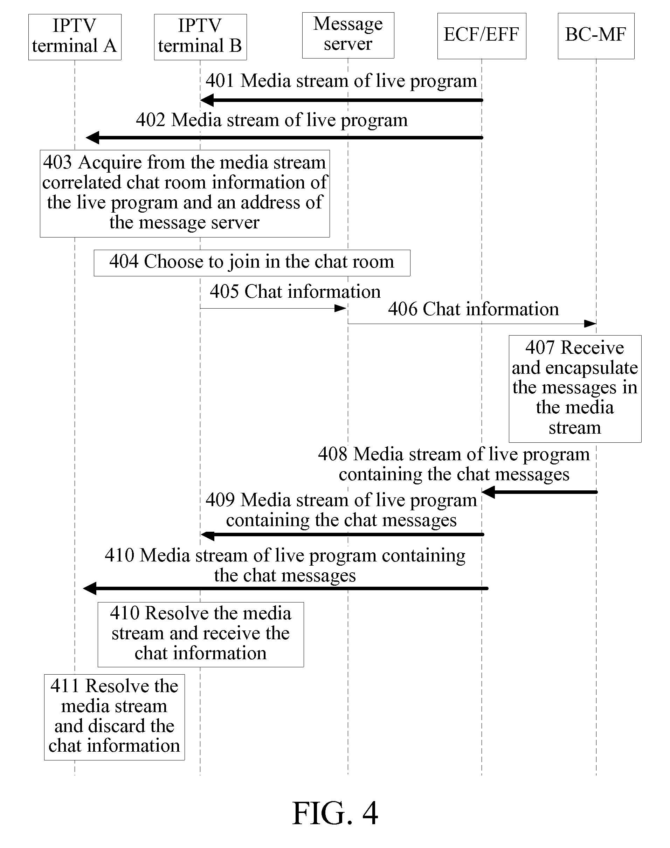

FIG. 4 is a schematic flow chart of a method for group-transmitting an IMS instant message according to Embodiment 4 of the present invention. In this embodiment, an IPTV user joins a channel of a live program 2 which provides a chat room service, by selecting a chat room through a chat room link in an IPTV terminal, so as to establish a session between the IPTV user and the chat room, and send chat contents to all users in the chat room. In this embodiment, a BC-MF is used as an entity for group-transmitting a multicast group message, an IPTV terminal B is used as a message sending entity, a message server is used as an instant message forwarding entity, and an IPTV terminal A is used as a message receiving entity. The method of this embodiment includes the following steps:
Step 401: The IPTV terminal B joins in a multicast group of the channel of the live program 2, and receives a media stream of a live program from the multicast secondary nodes ECF/EFF.
Step 402: The IPTV terminal A joins in the multicast group of the channel of the live program 2, and receives the media stream of the live program from the multicast secondary nodes ECF/EFF.
Step 403: All IPTV terminals joining in the multicast group of the channel of the live program 2 (including the IPTV terminal A and the IPTV terminal B in this embodiment) acquire from the media stream the chat room information associated with the live program and an address of the message server, for example, chatroom@example.com.
Step 404: The IPTV terminal B chooses to join in the chat room, and starts a chat room interface to input chat contents.
Step 405: The IPTV terminal B sends the chat messages to the message server. Request-URI is the address of the message server.
Step 406: The message server sends the received chat information to the BC-MF.
Step 407: The BC-MF receives and encapsulates the chat messages in a media stream of a live football game.
Step 408: The BC-MF replicates the media stream containing the chat messages to the multicast group ECF/EFF.
Steps 409 and 410: All IPTV terminals joining in the multicast group (including the IPTV terminal A and the IPTV terminal B in this embodiment) receive, through established multicast media channels, the media stream of the live program which contains the chat messages.
Step 411: The IPTV terminal B identifies the chat information contained in the media stream of the live program, and receives its owned chat information.
Step 412: The IPTV terminal A identifies the chat messages contained in the media stream of the live program, and discards unrelated chat information as the IPTV terminal A does not join in the chat room.

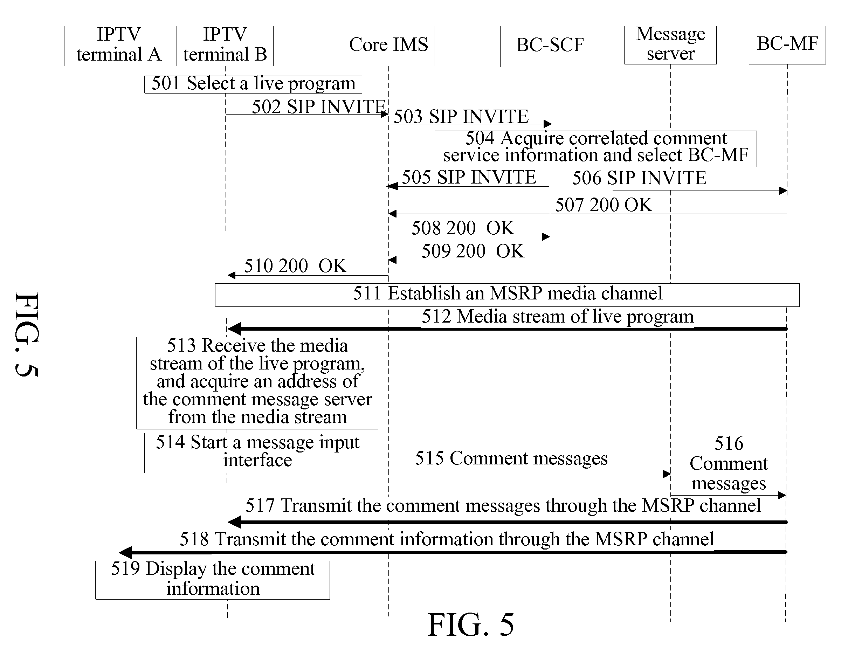

FIG. 5 is a schematic flow chart of a method for group-transmitting an IMS instant message according to Embodiment 5 of the present invention. In this embodiment, an IPTV user joins in a live program 3, starts a man-machine interface involving in a comment by means of a link or a button in a terminal, and inputs corresponding comment contents to participate in the comment, in which the comment information is displayed below the live program in a manner of scroll bar. The used method is that all IPTV terminals joining in the live program establish MSRP media channels between the IPTV terminals and a live media function BC-MF through live session negotiation, and receive, through the established MSRP channels, the comment information. In this embodiment, a message server is used as an instant message forwarding entity, the BC-MF is used as an entity for group-transmitting a multicast group message, an IPTV terminal B is used as a message sending entity and represents all the IPTV terminals joining in the live program, and an IPTV terminal A represents a message receiving entity. The method of this embodiment includes the following steps;
Step 501: The IPTV terminal B selects the live program 3.
Step 502: The IPTV terminal B sends a live program request to a Core IMS (that is, an IMS core network), in which the live program request may be a SIP INVITE message.
Step 503: The live program request is routed by the Core IMS to a live service control function BC-SCF.
Step 504: The BC-SCF acquires the comment service information associated with the live program according to a live program identifier carried in the live program request, and selects the BC-MF.
Steps 505 and 506: The BC-SCF sends the SIP INVITE request to the BC-MF.
Steps 507 to 510: The BC-MF returns a live program request response 200 OK to the IPTV terminal B.
Step 511: Establish an MSRP media channel between the IPTV terminal B and the BC-MF.

It should be noted that the preceding steps 501 to 511 accomplish that each IPTV terminal joining in the live program establishes the MSRP media channel through live session negotiation.
Steps 512 and 513: The IPTV terminal receives a media stream of the live program, and acquires an address of the message server associated with the live program from the media stream.
Step 514: The IPTV terminal B starts a comment service message input interface, and inputs comment contents.
Step 515: The IPTV terminal B sends the comment messages to the message server.
Step 516: The message server forwards the received message to the BC-MF.
Steps 517 to 519: The BC-MF group-transmits, through the established MSRP channel, the messages to all IPTV terminals in the multicast group, and the IPTV terminals receive the message and display the message contents.

It should be noted that the IPTV terminals may directly join in the multicast group of the live program without re-performing session establishment, when joining in the live program. In this case, the IPTV terminals may initiate a session modification process SIP re-INVITE according to associated message service description information acquired from the media stream or an EPG, and establish MSRP media channels through session modification negotiation.

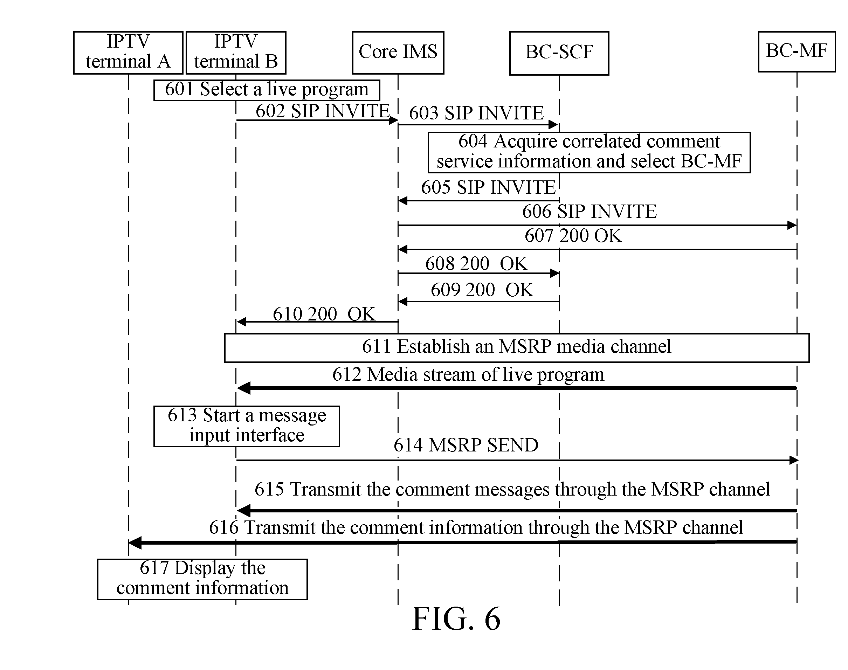

FIG. 6 is a schematic flow chart of a method for group-transmitting an IMS instant message according to Embodiment 6 of the present invention. In this embodiment, an IPTV user joins in a live program, starts a man-machine interface involving in a comment by means of a link or a button in a terminal, and inputs corresponding comment contents to participate in the comment, in which the comment information is displayed below the live program in a manner of scroll bar. In this embodiment, all IPTV terminals joining in the live program establish MSRP media channels between the IPTV terminals and a live media function BC-MF through live session negotiation, and send and receive the comment information through the established MSRP channels. In this embodiment, the BC-MF is used as an entity for group-transmitting a multicast group message, an IPTV terminal B is used as a message sending entity and represents all the IPTV terminals joining in the live program, and an IPTV terminal A is used as a message receiving entity.
Step 601: The IPTV terminal B selects a live program.
Step 602: The IPTV terminal B sends a live program request to a Core IMS, in which the live program request may be a SIP INVITE message.
Step 603: The INVITE request is routed by the Core IMS to a live service control function BC-SCF.
Step 604: The BC-SCF acquires comment service information associated with the live program according to a live program identifier carried in the live program request, and selects the BC-MF.
Steps 605 and 606: The BC-SCF sends the SIP INVITE request to the BC-MF.
Steps 607 to 610: The BC-MF returns a live program request response 200 OK to the IPTV terminal B.
Step 611: Establish an MSRP media channel between the IPTV terminal B and the BC-MF.

It should be noted that the preceding steps 601 to 611 accomplish that each IPTV terminal joining in the live program establishes the MSRP media channel through live session negotiation.
Step 612: The IPTV terminal B receives a media stream of the live program.
Step 613: The IPTV terminal B starts a comment service message input interface, and inputs comment contents.
Step 614: The IPTV terminal B sends, through the established MSRP channel, an MSRP SEND message carrying the comment contents to the BC-MF.
Steps 615 to 617: The BC-MF group-transmits, through all the established MSRP channels, the comment messages to all the IPTV terminals in the multicast group, and the IPTV terminals receive the message and display the message contents.

It should be noted that the IPTV terminals may directly join in the multicast group of the live program without re-performing session establishment, when joining in the live program. In this case, the IPTV terminals may initiate a session modification process SIP re-INVITE according to associated message service description information acquired from the media stream or an EPG, and establish MSRP media channels through session modification negotiation.

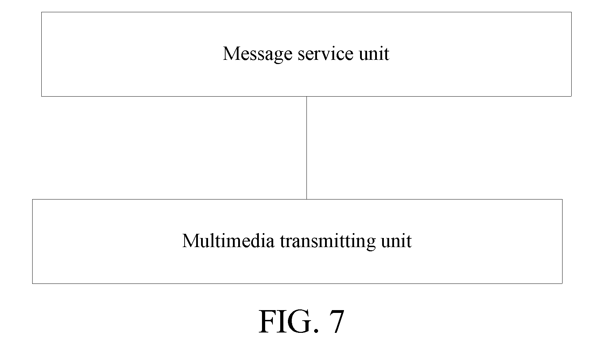

FIG. 7 shows a structure of an entity for group-transmitting a multicast group message according to a seventh embodiment of the present invention, which includes a message service unit and a multicast media transmitting unit.

The message service unit is configured to receive an IMS instant message sent from a message sending entity, in which the entity for group-transmitting a multicast group message and the message sending entity are located in the same multicast group. The multicast media transmitting unit is configured to send the received IMS instant message to all message receiving entities in the multicast group.

Specifically, the multicast media transmitting unit sends the IMS instant message to all the message receiving entities in the multicast group in one of the following manners.

Manner 1: The IMS instant message is forwarded, through a multicast transmission channel, to the message receiving entities in the multicast group.

In this manner, the entity for group-transmitting a multicast group message receives the IMS instant message sent from the message sending entity, optionally encapsulates the received IMS instant message in a multicast media stream, and forwards the IMS instant message, together with the multicast media stream, to all the message receiving entities joining in the multicast group by means of multicast; or definitely, directly forwards the IMS instant message without encapsulation to all the message receiving entities joining in the multicast group by means of multicast, that is, the IMS instant message is individually transmitted instead of being sent together with the media stream. By using this manner, the existing multicast resource channels can be utilized, with no need to re-allocate the resources.

In a specific implementation process, the multicast media transmitting unit sends, through the multicast transmission channels, the IMS instant message to all the message receiving entities in the multicast group, which may be achieved by a multicast router and multicast secondary nodes ECF/EFF in combination. The specific implementation method and application may refer to Embodiment 3 and Embodiment 4 in FIGs. 3 and 4.

Manner 2: The IMS instant message is sent, through MSRP media channels established by multicast session, to the message receiving entities in the multicast group.

In this manner, the entity for group-transmitting a multicast group message further includes an MSRP media channel establishing unit. The MSRP media channel establishing unit is configured to establish MSRP media channels between the unit itself and the message receiving entities by way of multicast session negotiation when the message receiving entities join in the multicast group. The multicast media transmitting unit sends, through the MSRP media channels, the IMS instant message to all the message receiving entities in the multicast group. Specifically, for example, in an IPTV live broadcast service, the message receiving entities send SIP INVITE messages when initiating a live session establishment process, and the INVITE requests are routed to the multicast service control unit. The multicast service control unit acquires the message service information associated with a live program, initiates a session request SIP INVITE to a multicast media transmitting unit, and establishes MSRP media channels between the message receiving entities and the multicast media transmitting unit by way of session negotiation. The specific implementation method and application may refer to Embodiment 5 and Embodiment 6 in FIGs. 5 and 6.

According to this embodiment, the entity for group-transmitting a multicast group message may receive the IMS instant message sent from any entity in the multicast group, and send the message to all the entities joining in the multicast group; and may be a multicast content source BC-MF in an IPTV architecture of a Telecommunications and Internet converged Services and Protocols for Advanced Networking (TISPAN) based on IMS.

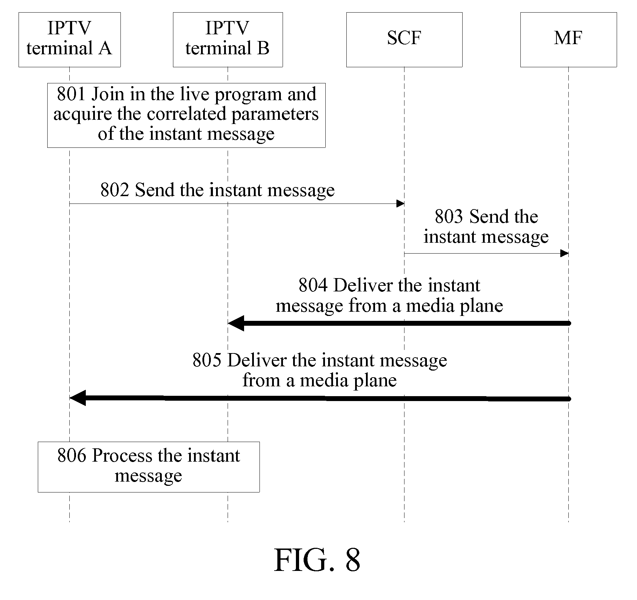

FIG. 8 is a schematic flow chart of a method for group-transmitting an IMS instant message according to Embodiment 8 of the present invention. In this embodiment, an IPTV user joins in a live program, and participates in an instant message service provided by the live program, for example, a comment service or a chat room service. In this embodiment, all IPTV terminals joining in the live program acquire parameters associated with the instant message service, for example, an instant message receiving address, specifically by acquiring from an EPG, acquiring from a media stream of the live program, or acquiring from a network side in establishing a live session. In this embodiment, an MF is used as a entity for group-transmitting a multicast group message, an SCF is used as an intermediate instant message receiving entity, an IPTV terminal A is used as a message sending entity, and an IPTV terminal B is used as a message receiving entity. The method of this embodiment includes the following steps:
Step 801: The IPTV terminal A and the IPTV terminal B join in the live program, and acquire the parameters associated with the instant message service, by, for example, acquiring comment service information associated with the live program from the EPG, such as an comment service identifier and the instant message receiving address.
Step 802: The IPTV terminal A sends, for example, through a signaling plane, an instant message to the SCF, in which the instant message contains information associated with the live program, for example, channel ID.
Step 803: The SCF receives and forwards the instant message to the instant message group-transmitting entity MF. The SCF selects the MF according to pre-configured information, or information carried in the received instant message.
Steps 804 and 805: The MF delivers, through multicast transmission channels, the instant message to all the IPTV terminals in the multicast group.
Step 806: The IPTV terminals process the received instant message, so as to display or discard the instant message.

Through the descriptions of the preceding embodiments, those skilled in the art may understand that the present invention may be implemented by using hardware only or by using software and a necessary universal hardware platform. Based on such understandings, the technical solution of the present invention may be embodied in the form of a software product. The software product may be stored in a nonvolatile storage media, which can be a Compact Disk Read-Only Memory (CD-ROM), Universal Serial Bus (USB) flash drive, or a removable hard drive. The software product includes a number of instructions that enable a computer device (personal computer, server, or network device) to execute the methods provided in the embodiments of the present invention.

The preceding descriptions are merely exemplary embodiments of the present invention, but not intended to limit the scope of the present invention. Any modification, equivalent replacement, or improvement made without departing from the principle of the present invention should fall within the scope of the present invention.

## Claims

1. A method for group-transmitting an IP Multimedia Subsystem, IMS, instant message, comprising:
Receiving, by a entity for group-transmitting a multicast group message, an IMS instant message sent from a message sending entity; and
Sending, by the entity for group-transmitting a multicast group message, the IMS instant message to all message receiving entities in a multicast group.

2. The method according to claim 1, wherein before the receiving, by the entity for group-transmitting a multicast group message, the IMS instant message sent from the message sending entity, the method further comprises:
acquiring, by the message sending entity, an address of the entity for group-transmitting a multicast group message; and
sending, by the message sending entity, the IMS instant message to the entity for group-transmitting a multicast group message according to the address, by carrying the IMS instant message in a signaling plane message.

3. The method according to claim 1, wherein before the receiving, by the entity for group-transmitting a multicast group message, the IMS instant message sent from the message sending entity, the method further comprises:
acquiring, by the message sending entity, an address of the entity for group-transmitting a multicast group message;
establishing, by the message sending entity, an Message Session Relay Protocol, MSRP, media channel according to the address, by negotiating with the entity for group-transmitting a multicast group message; and
sending, by the message sending entity, through the MSRP media channel, the IMS instant message to the entity for group-transmitting a multicast group message.

4. The method according to any one of claims 1 to 3, wherein the sending, by the entity for group-transmitting a multicast group message, the IMS instant message to all the message receiving entities in a multicast group specifically comprises:
sending, by the entity for group-transmitting a multicast group message, through multicast transmission channels, the IMS instant message to all the message receiving entities in the multicast group.

5. The method according to any one of claims 1 to 3, wherein the sending, by the entity for group-transmitting a multicast group message, the IMS instant message to all the message receiving entities in a multicast group specifically comprises:
establishing, by the entity for group-transmitting a multicast group message, MSRP media channels between the entity itself and the message receiving entities by way of multicast session negotiation, when the message receiving entities join in the multicast group; and
sending, by the entity for group-transmitting a multicast group message, through the MSRP media channels, the IMS instant message to all the message receiving entities in the multicast group.

6. An entity for group-transmitting a multicast group message, comprising:
a message service unit, configured to receive an IP Multimedia Subsystem, IMS, instant message sent from a message sending entity; and
a multicast media transmitting unit, configured to send the IMS instant message to all message receiving entities in the multicast group.

7. The entity according to claim 6, wherein
the multicast media transmitting unit sends, through multicast transmission channels, the IMS instant message to all the message receiving entities in the multicast group.

8. The entity according to claim 6, wherein the entity for group-transmitting a multicast group message further comprises a Message Session Relay Protocol, MSRP, media channel establishing unit,
the MSRP media channel establishing unit is configured to establish MSRP media channels between the unit itself and the message receiving entities by way of multicast session negotiation when the message receiving entities join in the multicast group; and
the multicast media transmitting unit sends, through the MSRP media channels, the IMS instant message to all the message receiving entities in the multicast group.
